# EUROPEAN PATENT APPLICATION

(11) **EP 1 205 865 A2**
(43) Date of publication of application: **15.05.2002**
(21) Application number: 01204181.0
(22) Date of filing: 31.10.2001
(51) Int. Cl.: G06F 17/60

(54) **Method for marketing a fragrance**

(30) Priority: 14.11.2000 US 712562
(71) Applicant: UNILEVER N.V., 3013 AL Rotterdam (NL); UNILEVER PLC, London EC4P 4BQ (GB)
(72) Inventor: Coccaro, Deborah Marie, New Jersey 07020 (US); Raible, Duane, 325 North Wells Chicago Illinois 60610 (US)
(74) Representative: Rosen Jacobson, Frans Lucas M.

(57) **Abstract**

Methods for marketing a fragrance are described, and the methods include providing devices for carrying a fragrance to consumers. The devices for carrying a fragrance are operated with a fragrance releasing device that enable a consumer to assess the aroma of the fragrance which is associated with a consumer product.

## Description

### Field of the Invention

This invention is directed to a method for marketing a fragrance. More particularly, the invention is directed to a method for sampling a fragrance by providing to a consumer a device for carrying the fragrance of a particular fragrance-based product.

### Background of the Invention

Many companies find it desirable to introduce new products to consumers before the products are actually commercially launched. It is also desirable for such companies to advertise and market new products after the products have become commercially available. In order to satisfy these needs, consumer product companies, for example, may mass mail or market a small sample of a product, such as a food product, soap, cologne, perfume or laundry detergent, so that consumers may try a particular product. The mass mailing of samples tends to be most desired when the fragrance of the product being sampled is to be judged by the consumer. This is true because fragrance acceptance is often a major incentive for product purchases.

Unfortunately, however, consumer product companies find it very expensive to mail samples of products to consumers. The cost of making a sample of a product and the postage or delivery charges required to get the sample to the consumer can discourage many companies from introducing and aggressively marketing new products (especially those which are fragrance based). Failure to sample typically means particular companies may not make sale targets and consumers will not be introduced to new products without having to purchase a product. Nevertheless, some aggressive consumer product companies do incur the expense of mailing samples to customers. However, these aggressive companies often do not secure the maximum benefits of the sampling because they typically do not have appropriate sampling feedback channels in place.

It is of increasing interest to develop an inexpensive method for sampling a product, and particularly, a product that is fragrance based. It also is of increasing interest to develop such a method coupled with appropriate feedback channels. This invention, therefore, is directed to a method for sampling a fragrance by providing to a consumer a device for carrying the fragrance of a particular fragrance-based product, as well as the means for supplying feedback related to the fragrance.

### Background Material

Efforts have been disclosed for marketing and advertising consumer products. In U.S. Patent No. 6,055,514, a system for marketing foods and services is described.

Other efforts have been disclosed for advertising and marketing consumer products. In U.S. Patent No. 6,036,601, a non-interactive method of advertising within game screen environments on the Internet is described.

In U.S. Patent No. 6,009,407, an integrated marketing and operations decision-making under multi-brand competition is described.

None of the references above describe a method for sampling (or marketing) a fragrance as described and claimed in the present invention.

### Summary of the Invention

In a first aspect, the present invention is directed to a method for sampling a fragrance comprising the steps of:
(a) providing a device comprising a fragrance to a recipient; and
(b) instructing the recipient to operatively associate the device with a fragrance releasing device to release the fragrance.

In a second aspect, the present invention is directed to a method for sampling a fragrance comprising the steps of:
(a) advertising a consumer product comprising fragrance on a website;
(b) instructing a user to order the fragrance for sampling;
(c) mailing a device comprising the fragrance to the user; and
(d) instructing the user to operatively associate the device with a fragrance releasing device to release the fragrance.

In a third aspect, the present invention is directed to a kit comprising:
(a) a device comprising a fragrance;
(b) instructions to operatively associate the device with a fragrance releasing device; and
(c) directions describing a means for providing feedback on the fragrance.

In a fourth aspect, the present invention is directed to a system comprising:
(a) a device comprising a fragrance;
(b) a fragrance releasing device; and
(c) a product advertisement,
wherein the product advertisement describes a product having substantially the same aroma as the fragrance, the product advertisement being with or without a sales coupon.

In a fifth aspect, the present invention is direct to a method for sampling a fragrance comprising the steps of:
(a) displaying a fragrance sample in a store, the fragrance sample being contained in a device; and
(b) instructing a consumer to operatively associate the device with a fragrance releasing device to release the fragrance,
wherein the fragrance sample is displayed in a product advertising display, or the fragrance sample is displayed by being attached to a consumer product for sale and not comprising the fragrance, or both.

As used herein, recipient, user and consumer may be used interchangeably and are defined to include an individual considering a consumer product. Operatively associated with is defined to mean a combination of at least two components to yield an apparatus having a function. Fragrance is defined to mean an odor having a commercially desirable aroma. Providing is defined to mean getting a device comprising a fragrance to a recipient; for example, by allowing a recipient to take the device, or by handing or mailing the device to the recipient.

### Brief Description of the Drawings

The subject matter which is regarded as the invention is particularly pointed out and distinctly claimed in the concluding portion of the specification. The invention, however, is illustrated by reference to the following description taken in conjunction with the accompanying drawing figures in which:
(i) Figures 1a and 1b depict, respectively, a device comprising a fragrance and a fragrance releasing device which may be used in this invention.
(ii) Figures 2a and 2b illustrate how the combination of the device comprising a fragrance and the fragrance releasing device work.

### Detailed Description of the Preferred Embodiments

There is no limitation with respect to the type of fragrance being sampled in this invention other than that the fragrance is one which is capable of being used or generated in a consumer product (e.g., shampoo, cologne, perfume, laundry detergent, skin cream, dryer sheet) or a service such as a cleaning or laundry cleaning service including a dry cleaning service. Fragrance, as used herein, is defined to include the aroma of an actual perfume (such as those sold by a commercial fragrance supplier), or the aroma of an actual consumer product (or service provided) with the actual perfume it is to be sold with, or the aroma that is generated by at least one actual perfume, wherein the fragrance has the aroma of an actual consumer product (or service provided) but is generated by a formulation that does not resemble the formulation of the actual consumer product (or service provided) and does not comprise the actual perfume of the consumer product (or service provided). As used herein, actual perfume is defined to mean the component or components intended for use in a formulation for consumer products and services. The fragrance having the aroma of an actual consumer product (or service provided), for sake of brevity, is defined to mean, for example, the fragrance of a consumer product, like Calvin Klein perfume, or a detergent like Wisk. Service provided, as used herein, is meant to mean a cleaning or laundry service (including dry cleaning) that marks (contacts), for example, a cleaned room or shirt with a fragrance that is associated with a business that provides the service.

It is also within the scope of this invention for the fragrance being sampled to resemble the aroma generated by a food product, like a chocolate chip cookie, beverage or a cooking sauce. The sampling of a fragrance that resembles the aroma of a food product is often desirable since such sampling can give the consumer a general idea with respect to how a given food product may taste, even in the absence of actual food product.

When sampling the fragrance (as described in this invention), the fragrance is typically loaded in a device for carrying a fragrance. The device for carrying the fragrance is often plastic, such as one including a polycarbonate or polyphenylene ether. The device for carrying the fragrance is sealed so that the fragrance does not leak out; however, the device is equipped with an opening which allows for the fragrance to escape on demand. Allowing the fragrance to escape on demand is defined to mean that the device comprising the fragrance is operatively associated with a fragrance releasing device, whereby the fragrance releasing device via, for example, an electrical, mechanical or computer-driven (e.g., software) means engages with an escape portion of the device comprising the fragrance to allow the fragrance to escape or be discharged.

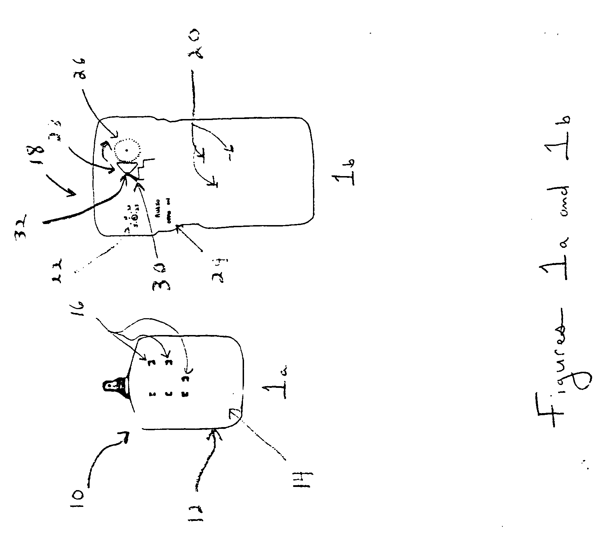

Turning to the Figures, Figure 1a is an illustrative example of a device comprising a fragrance 10 which may be used in this invention. The device comprising the fragrance 10 has walls 12 for containing a formulation 14 having a desired fragrance. The device comprising a fragrance 10 also may comprise notches 16 that are operatively associated with a fragrance releasing device 18 having clips 20 as illustrated in Figure 1b. The fragrance releasing device 18 may also have a timer with motor (not shown) that is set via a time dial 22 or audio switch 24 which causes a timer gear 26 to rotate in order to further rotate a timer handle 28 that is connected to a discharge finger 30 by way of axis 32.

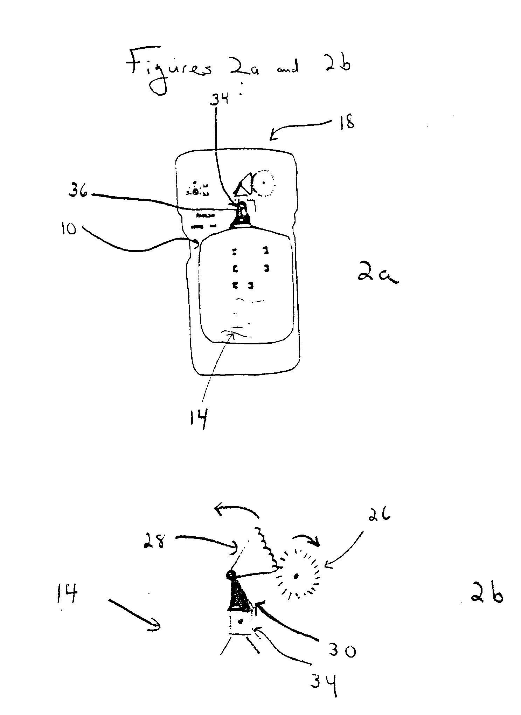

Figure 2a is an illustration of the device comprising the fragrance 10 operatively associated with the device for releasing a fragrance 18 as a result of notches 16 being interconnected with clips 20. When, for example, the timer dial 22 is set to activate the timer with motor or the audio switch 24 is set to activate the timer with motor, timer gear 26 rotates to engage with and rotate timer handle 28 and discharge finger 30 in order to activate (e.g., press) discharge cap 34 to release formulation 14 through an escape portion 36 so that the aroma of the fragrance of formulation 14 may be assessed by a user (not shown). Such a user, as a result of this invention will have the benefit of assessing the aroma of the fragrance associated with a product without having to buy or use the product. The supplier of the device comprising the fragrance (e.g., a consumer product company like Unilever) will have the benefit of marketing or sampling a fragrance without having to send or give actual samples to consumers.

Figure 2b is provided to illustrate that when timer gear 26 causes timer handle 28 to rotate, discharge finger 30 will activate (or press) discharge cap 34 to release formulation 14 from escape portion 36.

As mentioned above, Figures 1a-1b and 2a-2b depict an illustrative device comprising a fragrance, and a fragrance releasing device. Such devices collectively can be AC or DC powered and are made commercially available by suppliers like Technical Concepts of Mundelein, IL. Other types of devices which may be used with the marketing method disclosed herein include those made available by DigiScents, Inc. of Oakland, California through, for example, its known iSmell Technology. Such a technology is disclosed, for example, in Happi, June 2000, at page 56 (the disclosure of which is incorporated herein by reference), and the technology utilizes a device that attaches to a computer to drive or expel a fragrance. A more detailed description of the technology made available by DigiScents, Inc. may be found in Wired, November 1999, the disclosure of which is incorporated herein by reference.

It is further noted herein that other illustrative types of devices that may be used with the marketing method of the present invention are made available by France Telecom, Ruetz Technologies and Inspica. These suppliers have devices that can be worn on the body or attached to a computer wherein special command software triggers fragrance aromas. Even further, fragrance releasing devices with cartridges that plug into household outlets may be used with the marketing method of this invention. These plug-in devices are made commercially available by S.C. Johnson & Son, Inc. and sold under the name Plug Ins®.

Regarding the formulation 14 that is actually loaded into the device comprising a fragrance 10, such a formulation 14 is limited only to the extent that it generates a fragrance with an aroma that resembles a predetermined consumer product, like a shampoo. Therefore, in addition to perfume, the formulation 14 may further comprise water, alcohol, preservatives, emulsifiers and the like.

When conducting the sampling methods described herein, the device comprising a fragrance 10 may be mass mailed, advertised on a website, displayed on or in a display, attached to a consumer product or handed to consumers, for example, in a store or at a marketing or trade convention. Such devices comprising a fragrance 10, when advertised on a website, may be ordered by a user (e.g., consumer) by clicking self explanatory icons and made available to the user by, for example, delivery arrangements paid for by the owner of the website.

When a user receives a device comprising a fragrance 10, via any of the methods described herein, the device comprising the fragrance 10 may be provided with instructions for the user to insert the device comprising the fragrance 10 into a fragrance releasing device 18, already owned or leased by the user. Subsequent to operating the fragrance releasing device 18 and being exposed to the aroma of the fragrance released from the escape portion 36, the user can make up his or her mind with respect to whether or not the fragrance generates an aroma that is desirable with respect to the product the fragrance is associated with. Thus, when a user receives the device comprising a fragrance 10, and the device comprising a fragrance 10 is in a kit comprising a pizza sauce advertisement, coupon and instructions to use a fragrance releasing device 18, the user will then have the opportunity to realize and appreciate the aroma of the fragrance associated with such a pizza sauce. This opportunity gives the user the chance to decide whether or not such a pizza sauce is desirable.

In addition to the above, the device comprising a fragrance 10 may also be associated with a means for providing feedback. The means for providing feedback is not limited as long as such a feedback means gives the user an opportunity to provide feedback to the company (or a contractor of the same) providing the device comprising a fragrance. Such feedback may be provided from the user to the company by any of the known art recognized techniques. These techniques include filling out questionnaires, answering questions asked by representatives of the company on the telephone, participating in focus groups set up by the company, and answering questions set up on a questionnaire available on the company's web page.

The feedback provided by the user will assist the company in making business decisions that involve the product having the fragrance sampled with the methods of this invention. One important question that may be answered for the company (as a direct result of the feedback provided by the user) is whether or not to launch a particular product. Further, the feedback obtained herein may also be given to marketing and advertising executives of the company to assist in a variety of business decisions and to establish corporate knowledge databases.

It is noted herein that the method of this invention is preferably used before a product is made available to the public. If desired, however, such methods may be used after a product is launched in order to maintain or enhance sales.

It is further noted herein that it is within the scope of this invention to describe a certain brand or brand concept and associate the same with a fragrance. For example, a company may describe a new brand concept (e.g., a wrinkle reducing detergent) on its website and associate the new brand concept with a new or existing fragrance. The company may then provide a means for a recipient to obtain a device comprising the fragrance which is to be operatively associated with a fragrance releasing device present feedback regarding whether or not the fragrance connects with the new brand concept as described, for example, on the company's website.

The following example is provided to illustrate and facilitate an understanding of this invention. The example is not intended to limit the scope of the invention as described in the claims.

### Example 1

A representative of a consumer product company may hand to consumers a device comprising a fragrance 10 at a department store. The device comprising a fragrance 10 may comprise water, alcohol and perfume such that the resulting formulation 14 expels a fragrance with the aroma of a new laundry detergent being considered for launch by the consumer product company. After the consumer has received the device comprising a fragrance 10, the consumer, via instructions provided, will associate the device comprising a fragrance 10 with a fragrance releasing device 18 so that the consumer may appreciate and realize the aroma of the fragrance, bearing in mind the consumer product (e.g., laundry detergent) the aroma is associated with.

Subsequent to appreciating the fragrance, the consumer may decide to purchase such a laundry detergent, and may rely on any advertisements and use any coupons provided with the device comprising a fragrance 10. Moreover, via instructions provided by the company, the consumer may return feedback in a questionnaire provided by the company, whereby the company can assess and utilize the information returned in the questionnaire to make business decisions.

## Claims

1. A method for sampling a fragrance comprising the steps of:
(a) providing a device comprising a fragrance to a recipient; and
(b) instructing the recipient to operatively associate the device comprising a fragrance with a fragrance releasing device
wherein a fragrance having an aroma is released, and the aroma is substantially the same as an aroma of a consumer product or a service.

2. The method for sampling a fragrance according to claim 1 wherein the device comprising a fragrance is handed to the recipient.

3. The method for sampling a fragrance according to claim 1 wherein the device comprising a fragrance is mailed or delivered to the recipient.

4. The method for sampling a fragrance according to claim 1 wherein the device comprising a fragrance is ordered by the recipient on a web page of a company sampling the fragrance.

5. The method for sampling a fragrance according to claim 1 wherein the consumer product is a shampoo, cologne, perfume, laundry detergent, skin cream, dryer sheet or food product, and the service is a cleaning or dry cleaning service.

6. The method for sampling a fragrance according to claim 1 wherein the method further comprises the step of including an advertisement or a sales coupon with the device comprising a fragrance.

7. The method for sampling a fragrance according to claim 1 wherein the device comprising a fragrance is provided to the recipient by attaching the device comprising a fragrance to a consumer product in a store.

8. The method for sampling a fragrance according to claim 1 wherein the method further comprises the step of supplying a feedback means from the recipient to a company sampling the fragrance.

9. The method for sampling a fragrance according to claim 8 wherein the feedback means includes answering questions in a questionnaire.

10. The method for sampling a fragrance according to claim 9 wherein the questionnaire is answered on a web page of the company or the web page of a contractor of the company.

11. The method for sampling a fragrance according to claim 8 wherein the feedback means includes answering questions about the fragrance at a focus group.

12. The method for sampling a fragrance according to claim 1 further comprising a step of describing the fragrance on a website wherein the fragrance is described in association with a brand concept.

13. The method for sampling a fragrance according to claim 12 wherein the recipient can supply feedback that describes if the fragrance connects with the brand concept.

14. A kit comprising:
(a) device comprising a fragrance;
(b) instructions to operatively associate the device comprising a fragrance with a fragrance releasing device; and
(c) instructions describing a means for providing feedback on the fragrance
wherein the fragrance is substantially the same as a fragrance of a consumer product, or a fragrance used in a service.

15. A kit according to claim 14 wherein the consumer product is a shampoo, cologne, perfume, laundry detergent, skin cream, dryer sheet, food product and the service is a laundry service.

16. A kit according to claim 14 wherein the kit further comprises a product advertisement, or a sales coupon, or both.

17. A kit according to claim 14 wherein the kit further comprises a consumer product not associated with the fragrance.

18. A package comprising:
(a) a consumer product; and
(b) a device comprising a fragrance
wherein the fragrance generates an aroma not associated with the consumer product.
